# EUROPÄISCHE PATENTSCHRIFT

(11) **EP 1 254 404 B1**
(45) Veröffentlichungstag und Bekanntmachung des Hinweises auf die Patenterteilung: **20.08.2003**
(21) Anmeldenummer: 01927663.3
(22) Anmeldetag: 10.02.2001
(51) Int. Cl.: G05D 23/13

(54) **THERMOSTATVENTIL FÜR SANITÄRARMATUREN**
THERMOSTATIC VALVE FOR SANITARY FIXTURES
VANNE THERMOSTATIQUE POUR ROBINETS SANITAIRES

(30) Priorität: 12.02.2000 DE 10006374
(43) Veröffentlichungstag der Anmeldung: 06.11.2002
(73) Patentinhaber: Hansgrohe AG, 77761 Schiltach (DE)
(72) Erfinder: GINTER, Gerhard, 78144 Tennenbronn (DE); GINTER, Andreas, 78713 Schramberg-Heiligenbronn (DE); WANNER, Franz, 77743 Neuried (DE)
(74) Vertreter: Ruff, Michael
(86) Internationale Anmeldenummer: EP0101489
(87) Internationale Veröffentlichungsnummer: WO01059538

(56) Entgegenhaltungen:
- CH-A- 377 288
- DE-A- 2 448 485
- DE-B- 1 206 241
- US-A- 2 896 836
- US-A- 3 584 784
- US-A- 5 141 153

## Beschreibung

Im Sanitärbereich sind sogenannte Thermostatventile bekannt, also solche Ventile, bei denen eine einmal eingestellte Temperatur des Mischwassers von dem Ventil geregelt wird. Solche Sanitärarmaturen haben ein Betätigungselement, um die Menge des ausströmenden Mischwassers einzustellen, sowie ein anderes Betätigungselement, mit dem die Solltemperatur des Mischwassers eingestellt wird.

Thermostatventile sind üblicherweise so aufgebaut, dass sie ein Dehnstoffelement enthalten, das der Temperatur des Mischwassers ausgesetzt ist und bei Änderung dieser Temperatur einen Verschließkörper bewegt, der gleichzeitig für zwei Einlaßventile den Verschließkörper bildet. Die Einlassöffnung für das kalte Wasser und die Einlassöffnung für das warme Wasser sind als sich längs eines Umfangs erstreckende schmale Schlitze ausgebildet, wobei ein zylindrischer Ringbereich als Verschließkörper dient. Dieser Ringkörper muss zur Außenseite hin abgedichtet werden. Bei seiner Bewegung in axialer Richtung zur Veränderung des Querschnitts beider Einlassöffnungen wird die Dichtung über eine Fläche geschoben. Das durch die Einlassöffnungen strömende Wasser muss axial aus dem Mischraum herausströmen, so dass also die Strömungen beider Einlassöffnungen in die gleiche Richtung führen. Das Verschließelement muss ein Ring sein, der wasserdurchströmt ist. Ein Beispiel für einen derartige Thermostaten ist die DE 19716307 A1.

Ebenfalls bekannt ist eine Mischbatterie mit automatischer Regelung des ausfließenden Wassers (DE 1 206 241), bei der ein Auslass aus der Armatur zwischen den beiden Einläßen in die Armatur angeordnet ist. Das kalte und warme Wasser treten in gleicher Richtung in die Mischkammer ein.

Weiterhin bekannt ist eine thermostatisch gesteuerte Mischbatterie (DE 24 48 485 A1), bei der das kalte und warme Wasser durch eine Ringspalte in einer gedachten zylindrischen Fläche radial in gleicher Richtung in eine Mischkammer austreten.

Der Erfindung liegt die Aufgabe zugrunde, ein Thermostatventil für Sanitärarmaturen in seiner Funktion zu verbessern.

Zur Lösung dieser Aufgabe schlägt die Erfindung ein Thermostatventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Im Gegensatz zu dem Stand der Technik ist bei dem Thermostatventil nach der Erfindung der Auslass so angeordnet, dass er zwischen den beiden Einlassventilen liegt. Es tritt dadurch eine Vergleichmäßigung der Temperatur durch eine verbesserte Mischung des kalten und warmen Wassers ein. Darüberhinaus wird es nach der Erfindung möglich, die Dichtung des Verschließkörpers, die zur Abnutzung neigt, einzusparen.

Bei dem Ausdehnungselement, das der Temperatur des Mischwassers ausgesetzt ist, kann es sich mit Vorteil um ein mechanisch arbeitendes Element handeln, beispielsweise ein Bi-Metallelement oder auch ein bei solchen Thermostaten übliches Dehnstoffelement.

Der Auslass aus dem Raum, in den das kalte und warme Wasser zu ihrer gegenseitigen Vermischung einströmen, kann insbesondere mittig zwischen dem Einlassventil für das kalte und dem Einlassventil für das warme Wasser angeordnet sein.

Während im Stand der Technik der eigentliche Ventilsitz eine schmale Ringfläche in einer Hülse ist, wird erfindungsgemäß vorgeschlagen, dass der Ventilsitz mindestens eines der beiden Ventile, vorzugsweise beider Ventile, von einer im wesentlichen ebenen Ringfläche gebildet ist, die mit Vorteil eine durch den Rand des Ventilsitzes gebildete Öffnung begrenzt. Durch diese Öffnung strömt das Wasser in den Mischraum.

Insbesondere kann vorgesehen sein, dass die Ringflächen beider Ventile in zueinander parallel verlaufenden Ebenen angeordnet sind, die in Weiterbildung der Erfindung Stirnflächen des Mischraums bilden können. Die Bewegung der beiden Verschließkörper, die simultan erfolgt, kann daher eine axiale Bewegung in dem Mischraum sein. Die Verschließkörper können tellerartig ausgebildet sein.

In Weiterbildung der Erfindung kann vorgesehen sein, dass das Ausdehnungselement mit den Verschließkörpern beider Ventilsitze eine Baueinheit bildet. Dies kann beispielsweise derart verwirklicht sein, dass die Verschließelemente für beide Ventilsitze Teil des Ausdehnungselements sind bzw. einen Teil dieses Ausdehnungselements bilden.

Erfindungsgemäß kann in Weiterbildung vorgesehen sein, dass das Wasser durch beide Ventile gegenläufig in den Mischraum geführt wird. Dies führt zu einer besonders wirksamen Vermischung der Wasserströmung und damit zur Erzielung einer gleichmäßigen Mischtemperatur, der das Ausdehnungselement dann unterworfen werden kann.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: Figur 1 einen Längsschnitt durch ein Thermostatventil nach der vorliegenden Erfindung;
- Fig. 2: in einem gegenüber der Figur 1 vergrößerten Maßstab eine schematische Darstellung der Wirkungsweise des Thermostatventils.

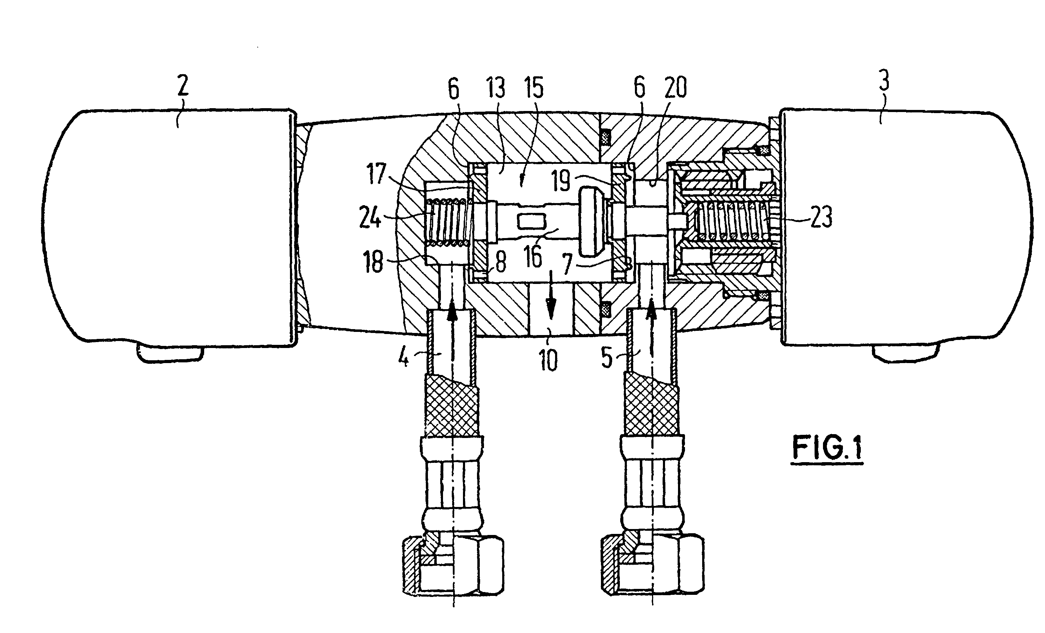

Die Figur 1 zeigt eine teilweise geschnittene Ansicht eines Thermostatventils nach der Erfindung. Das Thermostatventil enthält einen Armaturenkörper 1, der eine langgestreckte leicht ballige Form aufweist. Im Bereich seines einen Endes ist ein Griff 2 zur Mengenregulierung des das Thermostatventil verlassenden Mischwassers angeordnet. Er kann um die Längsachse des Ventils verdreht werden. Am gegenüberliegenden Ende ist ein Handgriff 3 angeordnet, mit dem die Solltemperatur des Mischwassers eingestellt werden kann.

In das Armaturengehäuse 1 führt radial ein Zulauf 4 für warmes Wasser und, ebenfalls radial, ein Zulauf 5 für kaltes Wasser. Beide Zuläufe, die beispielsweise über Schläuche verwirklicht sein können, münden in radiale Bohrungen, die jeweils in einem zylindrischen Raum 18, 20 innerhalb des Armaturengrundkörpers 1 münden.

In dem Armaturenkörper 1 ist etwa mittig ein zylindrischer koaxial zu dem Grundkörper verlaufender Raum 13 gebildet, der zur Aufnahme eines Ventils dient. Der zylindrische Raum 13, in den der Warmwasserzulauf führt, mündet als kreisrunde koaxiale Öffnung in den zentralen Mischraum 13. Die Öffnung wird damit von einer Schulterfläche 6 umgeben.

Auf der gegenüberliegenden Stirnseite des Mischwasserraumes 13 mündet als konzetrische Öffnung der zylindrische Raum 20, in den der Kaltwasserzulauf 5 führt.

In dem Raum 13 ist ein Ventilelement mit einer Regeleinheit 15 eingesetzt. Die Regeleinheit 15 enthält ein Dehnstoffelement, das auf Temperaturänderungen anspricht und reagiert. Die Regeleinheit enthält im Bereich ihres einen axialen Endes ein mit ihr verbundenes Verschließelement 17, das in der dargestellten Ausführungsform die Form einer flachen Scheibe aufweist. Auf seiner dem Stirnende der Kammer 13 zugewandten Seite enthält das Verschließelement 17 einen umlaufenden konzentrischen Wulst, der mit der Schulter 6 zusammenwirkt, die die Öffnung 18 umgibt. Das Verschließelement 17 bildet zusammen mit der Schulter 16 ein Ventil. Der die Öffnung 18 umgebende Randbereich der Schulter 16 bildet also einen Ventilsitz.

Im Bereich ihres gegenüberliegenden axialen Endes enthält die Regeleinheit 15 ein zweites ähnlich aufgebautes mit ihr verbundenes Verschließelement 19, das seinen Wulst 7 auf der dem Raum 20 zugewandten Seite aufweist. Auch dieses Verschließelement 19 ist als flache Scheibe ausgebildet. Der Wulst 7 wirkt mit der Schulter 6 zusammen, die die Öffnung 20 umgibt. Auch hier ist ein Ventil mit einem Ventilsitz gebildet.

Der Abstand der beiden Verschließelemente 17, 19 voneinander ist so gewählt, dass der axiale Abstand der Außenseite der Wulste 7 kleiner ist als der Abstand der Schultern 6 voneinander. Dadurch ist immer eines der beiden Ventile geöffnet. Beide Verschließelemente 17, 19 enthalten radial außerhalb des Wulstes 7 in axialer Richtung verlaufende Öffnungen oder Durchbrüche 8. Im übrigen reichen die Verschließkörper 17, 19 bis an den Mantel des zylindrischen Raumes 13. Dadurch führen sie die Regeleinheit 15.

Bei geöffnetem Ventil für das kalte oder warme Wasser fließt das Wasser durch den Abstand zwischen der jeweiligen Schulter 6 und der Kuppe der Wulste 7 nach außen und dann durch die Durchbrüche oder Löcher 8 in den Raum 13. Aus dem Raum 13 führt eine Auslassöffnung 10 zu einem nicht weiter dargestellten Ausgang aus der Armatur.

In dem Ausdehnungselement 16 ist ein Material angeordnet, das sich bei Temperaturerhöhung ausdehnt. Wenn sich das Material im Inneren des Ausdehnungselements 16 ausdeht, so verschiebt es dieses mit den beiden Verschließelementen 17, 19 in den Figuren nach links. Dies geschieht gegen die Wirkung einer Steuerfeder 24. Bei dieser Verschiebung verringert sich der Strömungsquerschnitt des durch die Öffnungen 18 und die Verschließkörper 17 gebildeten Ventils. Gleichzeitig vergrößert sich auf der gegenüberliegenden Seite der Abstand zwischen dem Verschließkörper 19 und dem Rand der Öffnung 20. Auf diese Weise wird das Verhältnis von Strömungsquerschnitt des warmen Wassers zu dem Strömungsquerschnitt des kalten Wassers verändert.

Beide Strömungen fließen, dargestellt durch die Pfeile, durch die Öffnungen 18, 20 hindurch in den Raum 13, wo sie sich vermischen. Dieser Raum wird hier als Mischraum bezeichnet. Das Ausdehnungselement 16 ist der Temperatur des in diesem Raum vorhandenen Mischwassers ausgesetzt. Es regelt daher die Öffnungsquerschnitte der beiden Ventile in Abhängigkeit von der Temperatur des Mischwassers.

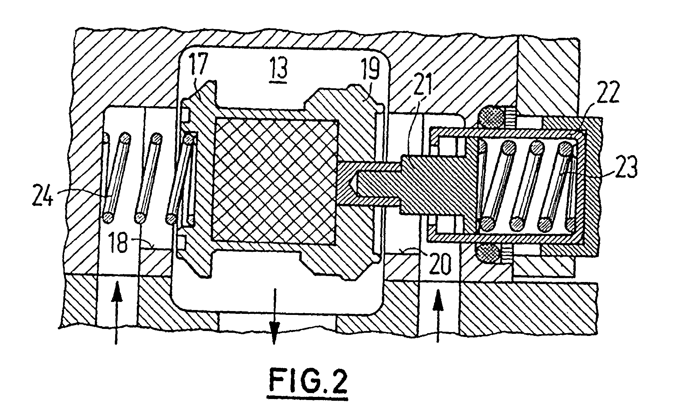

Der Auslass aus diesem Raum in Richtung des in Fig. 1 und 2 nach unten zeigenden Pfeiles erfolgt an einer Stelle, die räumlich und in Bewegungsrichtung des Verschließkörpers gesehen zwischen den beiden Ventilen liegt. Die beiden Strömungen gelangen gegeneinander gerichtet in den Mischraum 13, so dass sie sich dort sehr gut und schnell vermischen. Das Dehnstoffelement 16 weist daher relativ schnell die Temperatur des Mischwassers auf.

Durch Verstellung der Vorspannung der Steuerfeder 23, hervorgerufen durch eine Änderung der axialen Position des äußeren Stößels 22, kann die Position der Verschließelemente 17, 19 und damit die Soll-Temperatur des Thermostatventils eingestellt werden. Da die beiden zu den Einlassventilen führenden Wasserführungen getrennt voneinander verlaufen, wird für die Verschließelemente 17, 19 keine Dichtung benötigt.

Die Figur 2 zeigt in vergrößertem Maßstab schematisch eine zweite Ausführungsform, bei der ebenfalls das Ausdehnungselement 16 in Bewegungsrichtung gesehen zwischen den beiden Einlassventilen angeordnet ist. In dieser Ausführungsform ist das Ausdehnungselement als eine Baueinheit ausgebildet, die im Bereich ihres einen axialen Endes das Verschließelement 17 und im Bereich ihres gegenüberliegenden Endes das Verschließelement 19 bildet. Beide Verschließelemente sind so ausgebildet bzw. dimensioniert, dass sie in radialer Richtung nicht bis zu dem Rand des Innenraumes 13 führen, in dem sich das Wasser vermischt. Das warme und das kalte Wasser fließt also bei geöffnetem Ventil an den Verschließelementen 17, 19 vorbei.

Im Inneren des Ausdehnungselementes ist ein Raum gebildet, in dem das auf die Temperaturänderungen ansprechende Material eingefüllt ist. Die Wandstärke des Ausdehnungselementes ist an den Stirnseiten deutlich größer als am Mantel, so dass das im Raum 13 vorhandene Mischwasser im Inneren die Ausdehnung des Elementes hauptsächlich bestimmt.

Wenn sich das Material im Inneren des Ausdehnungselements ausdehnt, so greift es an einen Stößel 21 an, der in einen zweiten Stößel 22 eingreift und diesem gegenüber teleskopisch gelagert ist. Die eine Überlastfeder bildende Druckfeder 23 ist hier zwischen der inneren Stirnseite des äußeren Stößels 22 und der äußeren Stirnseite des inneren Stößels 21 angeordnet.

Durch Verändern der Lage des äußeren Stößels 22, beispielsweise mit Hilfe des in Figur 1 dargestellten Griffs 3, kann die Vorspannung der Feder 24 und damit die Solltemperatur des Thermostatventils geändert werden. Die Wirkungsweise des in Figur 2 dargestellten Ventils entspricht der Wirkungsweise des in Figur 1 dargestellten Ventils, so dass sie nicht nochmals im Einzelenen beschrieben wird.

## Patentansprüche

1. Thermostatventil für Sanitärarmaturen, mit
1.1 einem in einen Mischraum (13) führenden Einlassventil für kaltes Wasser,
1.2 einem in dem Mischraum (13) führenden Einlassventil für warmes Wasser,
1.3 die jeweils einen Ventilsitz und ein Verschließelement (17, 19) aufweisen,
1.4 einem in dem Mischraum (13) angeordneten und der Temperatur des Mischwassers ausgesetzten Ausdehnungselement (16), das
1.4.1 mit beiden Verschließelementen (17, 19) wirkverbunden ist und
1.4.2 diese bei Temperaturänderungen gemeinsam zur Steuerung beider Ventile bewegt, sowie mit
1.5 einem Auslass für das Mischwasser, der
1.5.1 zwischen den beiden Ventilen angeordnet ist, **dadurch gekennzeichnet, dass** die beiden Strömungen gegeneinander gerichtet in den Mischraum (13) gelangen.

2. Thermostatventil nach Anspruch 1, bei dem der Ventilsitz mindestens eines der beiden Ventile von einer im wesentlichen ebenen Ringfläche gebildet ist.

3. Thermostatventil nach Anspruch 1 oder 2, bei dem der Ventilsitz beider Ventile von einer im wesentlichen ebenen Ringfläche gebildet ist.

4. Thermostatventil nach einem der vorhergehenden Ansprüche, bei dem die Ebenen, in denen die Ventilsitze beider Ventile angeordnet sind, parallel zueinander verlaufen.

5. Thermostatventil nach einem der vorhergehenden Ansprüche, bei dem die Ebenen, in denen die Ventilsitze beider Ventile angeordnet sind, Stirnflächen des Mischraums (13) bilden.

6. Thermostatventil nach einem der vorhergehenden Ansprüche, bei dem das Ausdehnungselement (16) mit den Verschließelementen (17, 19) beider Ventile eine Baueinheit bildet.

7. Thermostatventil nach einem der vorhergehenden Ansprüche, bei dem die Verschließelemente (17, 19) beider Ventile einen Teil des Dehnstoffelementes (16) bilden.

8. Thermostatventil nach einem der vorhergehenden Ansprüche, bei dem das Wasser durch beide Ventile gegenläufig und vorzugsweise axial in den Mischraum (13) geführt wird und aus diesem insbesondere radial entnommen wird.

9. Thermostatventil nach einem der vorhergehenden Ansprüche, bei dem das Ausdehnungselement ein Dehnstoffelement enthält.

10. Thermostatventil nach einem der Ansprüche 1 bis 8, bei dem das Ausdehnungselement (16) ein Bi-Metallelement aufweist.

11. Thermostatventil nach einem der Ansprüche 1 bis 8, bei dem das Ausdehnungselement ein Element aus Memory-Metall aufweist.

## Claims

1. Thermostatic valve for sanitary fittings, having
1.1 an intake valve for cold water leading into a mixing chamber (13),
1.2 an intake valve for hot water leading into mixing chamber (13),
1.3 which in each case have a valve seat and a closing member (17, 19),
1.4 an expansion element (16) located in the mixing chamber (13) and exposed to the mixed water temperature and which
1.4.1 is operatively connected to both closing members (17, 19) and
1.4.2 jointly moves the same in the case of temperature changes for controlling both valves, as well as having
1.5 an outlet for the mixed water, which
1.5.1 is positioned between the two valves, **characterized in that** the two flows pass in opposition into the mixing chamber (13).

2. Thermostatic valve according to claim 1, wherein the valve seat of at least one of the two valves is formed by a substantially planar ring area.

3. Thermostatic valve according to claim 1 or 2, wherein the valve seat of both valves is formed by a substantially planar ring area.

4. Thermostatic valve according to one of the preceding claims, wherein the planes in which are located the valve seats of both valves are parallel to one another.

5. Thermostatic valve according to one of the preceding claims, wherein the planes in which are located the valve seats of both valves form the front faces of the mixing chamber (13).

6. Thermostatic valve according to one of the preceding claims, wherein the expansion element (16) with the closing members (17, 19) of both valves forms a standard component.

7. Thermostatic valve according to one of the preceding claims, wherein the closing members (17, 19) of both valves form a part of the expansion element (16).

8. Thermostatic valve according to one of the preceding claims, wherein the water passes in opposition through both valves and preferably axially into the mixing chamber (13) and is in particular removed radially therefrom.

9. Thermostatic valve according to one of the preceding claims, wherein the expansion element contains an expansible material element.

10. Thermostatic valve according to one of the claims 1 to 8, wherein the expansion element (16) has a bimetallic element.

11. Thermostatic valve according to one of the claims 1 to 8, wherein the expansion element has a memory metal element.

## Revendications

1. Vanne thermostatique pour robinetterie sanitaire, avec
1.1 une vanne d'arrivée d'eau froide conduisant dans une chambre de mélange (13),
1.2 une vanne d'arrivée d'eau chaude conduisant dans une chambre de mélange (13),
1.3 présentant chacune un siège de vanne et un élément d'obturation (17, 19),
1.4 un élément d'expansion (16) placé dans la chambre de mélange (13) et exposé à la température de l'eau mixte, qui
1.4.1 est relié activement aux deux éléments d'obturation (17,19) et
1.4.2 lors des changements de température, met ces derniers en mouvement ensemble afin de commander les deux vannes ainsi qu'
1.5 une sortie pour l'eau mixte,
1.5.1 située entre les deux vannes, **caractérisée par le fait que** les deux flux pénètrent dans la chambre de mélange (13) en sens opposé.

2. Vanne thermostatique selon la revendication 1, dont le siège d'au moins une des deux vannes est constitué d'une surface annulaire essentiellement plane.

3. Vanne thermostatique selon la revendication 1 ou 2, dont les sièges des deux vannes sont constitués d'une surface annulaire essentiellement plane.

4. Vanne thermostatique selon l'une des revendications ci-dessus, dont les plans dans lesquels sont disposés les sièges des deux vannes, sont parallèles entre eux.

5. Vanne thermostatique selon l'une des revendications ci-dessus, dont les plans dans lesquels sont disposés les sièges des deux vannes forment les faces opposées de la chambre de mélange (13).

6. Vanne thermostatique selon l'une des revendications ci-dessus dont l'élément d'expansion (16) forme, avec les éléments d'obturation (17, 19) des deux vannes, une unité de construction.

7. Vanne thermostatique selon l'une des revendications ci-dessus dont les éléments d'obturation (17, 19) des deux vannes forment une partie de l'élément en matériau expansible (16).

8. Vanne thermostatique selon l'une des revendications ci-dessus dont l'eau est amenée à travers les deux vannes en sens opposé et de préférence axialement dans la chambre de mélange (13) et est prélevée de celle-ci en particulier radialement.

9. Vanne thermostatique selon l'une des revendications ci-dessus dont l'élément d'expansion contient un élément en matériau expansible.

10. Vanne thermostatique selon l'une des revendications 1 à 8 dont l'élément d'expansion (16) présente un élément bilame.

11. Vanne thermostatique selon l'une des revendications 1 à 8 dont l'élément d'expansion présente un élément en métal à mémoire de forme.
